# EUROPEAN PATENT APPLICATION

(11) **EP 4 432 393 A1**
(43) Date of publication of application: **18.09.2024**
(21) Application number: 23737436.8
(22) Date of filing: 06.01.2023
(51) Int. Cl.: H01M 4/36, H01M 4/525, H01M 4/505, H01M 4/62, H01M 10/052, C01G 53/00, H01M 4/02

(54) **POSITIVE ELECTRODE ACTIVE MATERIAL, METHOD FOR PREPARING SAME, AND POSITIVE ELECTRODE AND LITHIUM SECONDARY BATTERY INCLUDING SAME**

(30) Priority: 07.01.2022 KR 20220002995
(71) Applicant: LG Energy Solution, Ltd., Seoul 07335 (KR)
(72) Inventor: JUNG, Hae Jung, Daejeon 34122 (KR); JUNG, Wang Mo, Daejeon 34122 (KR); JO, Chi Ho, Daejeon 34122 (KR); YOO, Tae Gu, Daejeon 34122 (KR); HWANG, Jin Tae, Daejeon 34122 (KR); HEO, Jong Wook, Daejeon 34122 (KR); CHO, Hyeon Jin, Daejeon 34122 (KR)
(74) Representative: Hoffmann Eitle
(86) International application number: PCT/KR2023/000292
(87) International publication number: WO 2023/132688

(57) **Abstract**

The present invention relates to a positive electrode active material including a lithium nickel-based oxide in the form of a single particle composed of one nodule or a pseudo-single particle that is a composite of 30 or less nodules; and a coating portion which is formed in the form of an island on a portion of a surface of the lithium nickel-based oxide particle and includes cobalt (Co), wherein, in a Ni L3-edge spectrum obtained by measuring the surface of the lithium nickel-based oxide, which is in contact with the coating portion, by electron energy loss spectroscopy, an intensity at 855.5 eV is higher than an intensity at 853 eV, a preparation method thereof, and a positive electrode and a lithium secondary battery which include the positive electrode active material.

## Description

### TECHNICAL FIELD

This application claims priority from Korean Patent Application No. 10-2022-0002995, filed on January 7, 2022, the disclosure of which is incorporated by reference herein.

The present invention relates to a positive electrode active material, a preparation method thereof, and a positive electrode and a lithium secondary battery which include the positive electrode active material, and more particularly, to a positive electrode active material in the form of a single particle or a pseudo-single particle having excellent life characteristics and resistance characteristics, a preparation method thereof, and a positive electrode and a lithium secondary battery which include the positive electrode active material.

### BACKGROUND ART

A lithium secondary battery is generally composed of a positive electrode, a negative electrode, a separator, and an electrolyte, and the positive electrode and the negative electrode respectively include active materials capable of intercalating and deintercalating lithium ions.

Lithium cobalt oxide (LiCoO₂), lithium nickel oxide (LiNiO₂), lithium manganese oxide (LiMnO₂ or LiMn₂O₄), or a lithium iron phosphate compound (LiFePO₄) has been used as a positive electrode active material of the lithium secondary battery. Among them, the lithium cobalt oxide has advantages of high operating voltage and excellent capacity characteristics, but is difficult to be commercially used in a large-capacity battery due to the high price and supply instability of cobalt as a raw material. Since the lithium nickel oxide has poor structural stability, it is difficult to achieve sufficient life characteristics. The lithium manganese oxide has excellent stability, but has a problem in that capacity characteristics are inferior. Accordingly, lithium composite transition metal oxides containing two or more types of transition metals have been developed to compensate for the problems of the lithium transition metal oxides containing nickel (Ni), cobalt (Co), or manganese (Mn) alone, and, among them, a lithium nickel cobalt manganese oxide containing Ni, Co, and Mn has been widely used in the field of electric vehicle batteries.

A conventional lithium nickel cobalt manganese oxide was generally in a form of a spherical secondary particle in which tens to hundreds of primary particles were aggregated. However, with respect to the lithium nickel cobalt manganese oxide in the form of a secondary particle in which many primary particles are aggregated as described above, there is a problem in that particle breakage, in which the primary particles fall off in a rolling process during preparation of the positive electrode, is likely to occur and cracks occur in the particles during charge and discharge. In a case in which the particle breakage or cracking of the positive electrode active material occurs, since a contact area with an electrolyte solution is increased, active material degradation and gas generation due to a side reaction with the electrolyte solution are increased, and, as a result, there is a problem in that life characteristics are degraded.

Also, demand for high-output and high-capacity batteries, such as batteries for electric vehicles, is recently increasing, and, accordingly, a nickel content in the positive electrode active material has tended to gradually increase. In a case in which the nickel content in the positive electrode active material increases, initial capacity characteristics improve, but, since a large amount of highly reactive Ni⁴⁺ ions are generated if charge and discharge are repeated, structural collapse of the positive electrode active material occurs, and, as a result, there is a problem in that degradation rate of the positive electrode active material is increased to degrade life characteristics and reduce battery safety.

To solve the above-described problems, a technique of preparing a positive electrode active material in a form of a single particle rather than a secondary particle by increasing sintering temperature during the preparation of the lithium nickel cobalt manganese oxide has been proposed. With respect to the positive electrode active material in the form of a single particle, since a contact area with an electrolyte solution is smaller than a conventional positive electrode active material in the form of a secondary particle, there is less side reaction with the electrolyte solution, and there is less particle breakage during the preparation of an electrode due to excellent particle strength. Thus, in a case in which the positive electrode active material in the form of a single particle is used, there is an advantage in that gas generation and life characteristics are excellent.

However, since the lithium composite transition metal oxide particles in the form of a single particle have relatively larger size of primary particles and less interface, as a diffusion path for lithium ions, between the primary particles than the conventional lithium composite transition metal oxide particles in the form of a secondary particle, lithium mobility is low, and, since the lithium composite transition metal oxide particles are prepared at a relatively high sintering temperature, a rocksalt phase is formed on surfaces of the particles to increase surface resistance. Thus, since the lithium composite transition metal oxide particles in the form of a single particle have high lithium diffusion resistance and non-uniform movement of the lithium ions during charge and discharge, there is a problem in that crystal structure deformation and resulting particle cracks are likely to occur, resistance is increased during charge and discharge due to the particle cracks, and life characteristics are degraded.

### DISCLOSURE OF THE INVENTION

### TECHNICAL PROBLEM

An aspect of the present invention provides a positive electrode active material in the form of a single particle or a pseudo-single particle with a low increase in resistance during charge and discharge and excellent capacity characteristics and life characteristics, a preparation method thereof, and a positive electrode and a lithium secondary battery in which the positive electrode active material is used.

### TECHNICAL SOLUTION

According to an embodiment, the present invention provides a positive electrode active material including a lithium nickel-based oxide in a form of a single particle composed of one nodule or a pseudo-single particle that is a composite of 30 or less nodules; and a coating portion which is formed in a form of an island on a portion of a surface of the lithium nickel-based oxide particle and includes cobalt

(Co), wherein, in a nickel (Ni) L3-edge spectrum obtained by measuring the surface of the lithium nickel-based oxide, which is in contact with the coating portion, by electron energy loss spectroscopy, an intensity at 855.5 eV is higher than an intensity at 853 eV.

According to another embodiment, the present invention provides a method of preparing a positive electrode active material which includes the steps of: preparing a lithium nickel-based oxide in a form of a single particle or a pseudo-single particle by mixing a transition metal precursor and a lithium raw material and sintering the mixture; and forming a coating portion by mixing the lithium nickel-based oxide and a cobalt-containing coating material and performing a heat treatment at a temperature of 600°C to 750°C.

According to another embodiment, the present invention provides a positive electrode including a positive electrode active material layer which includes the above-described positive electrode active material of the present invention, and a lithium secondary battery including the positive electrode.

### ADVANTAGEOUS EFFECTS

Since a positive electrode active material according to the present invention has less particle breakage during preparation of an electrode and charge and discharge by including a lithium nickel-based oxide in the form of a single particle or pseudo-single particle with high particle strength and has a small contact area with an electrolyte solution to suppress the occurrence of a side reaction with the electrolyte solution, an amount of gas generated is small and high-temperature life characteristics are excellent when the positive electrode active material is used in a secondary battery.

Also, since the positive electrode active material according to the present invention includes a cobalt (Co)-containing coating portion in a form of an island on a portion of a surface of a lithium nickel-based oxide particle and allows more nickel (Ni) ions having an oxidation number of +3 or more to exist on the surface of the lithium nickel-based oxide particle which is in contact with the Co-containing coating portion, it may improve capacity characteristics and life characteristics while minimizing an increase in resistance.

In a case in which the Co-containing coating portion is formed on the surface of the lithium nickel-based oxide particle, a surface structure of the positive electrode active material is formed into a stable layered structure by Co, and, as a result, intercalation and deintercalation of lithium ions are facilitated to improve surface stability of the positive electrode active material and an effect of improving initial capacity characteristics may be obtained. However, in a case in which the Co-containing coating portion is formed in the form of a continuous layer, the surface stability is improved, but there is a problem in that the resistance is increased due to increased formation of an electrically inactive NiO rock-salt phase. Thus, in the present invention, since Co coating conditions are controlled so that the Co-containing coating portion is formed in the form of an island on the portion of the surface of the lithium nickel-based oxide and generation of Ni²⁺ ions is suppressed on the surface of the lithium nickel-based oxide which is in contact with the Co-containing coating portion, the capacity characteristics and life characteristics may be improved while the increase in resistance is minimized.

A method of preparing a positive electrode active material according to the present invention allows a Co-containing coating portion to be formed in the form of an island, that is, in the form in which particles are distributed sporadically, by preparing a lithium nickel-based oxide in the form of a single particle or a pseudo-single particle, then mixing the lithium nickel-based oxide with a cobalt raw material, and performing a heat treatment at a specific temperature, and allows the oxidation number of nickel ions at an interface to be +3 or more by suppressing the formation of the rock-salt phase at the interface between the Co-containing coating portion and the lithium nickel-based oxide.

### BRIEF DESCRIPTION OF THE DRAWINGS

FIG. 1 is an SEM (Scanning Electron Microscope) image and an EDS (Energy Dispersive X-ray Spectroscopy) Co mapping image of a positive electrode active material prepared by Example 1.
FIG. 2 is an SEM image and an EDS Co mapping image of a positive electrode active material prepared by Example 2.
FIG. 3 is an SEM image and an EDS Co mapping image of a positive electrode active material prepared by Example 3.
FIG. 4 is an SEM image and an EDS Co mapping image of a positive electrode active material prepared by Comparative Example 1.
FIG. 5 is an SEM image and an EDS Co mapping image of a positive electrode active material prepared by Comparative Example 2.
FIG. 6 is an SEM image and an EDS Co mapping image of a positive electrode active material prepared by Comparative Example 3.
FIG. 7 is a HAADF (High-Angle Annular Dark-Field) image and an EELS (Electron energy loss spectroscopy) spectrum image of the positive electrode active material prepared by Example 1.
FIG. 8 is EELS Ni L3-edge spectra of regions 1 to 3 of the EELS spectrum image of FIG. 7.
FIG. 9 is a HAADF image and an EELS spectrum image of the positive electrode active material prepared by Comparative Example 1.
FIG. 10 is EELS Ni L3-edge spectra of regions 1 and 2 of the EELS spectrum image of FIG. 9.
FIG. 11 is a HAADF image and an EELS spectrum image of the positive electrode active material prepared by Comparative Example 2.
FIG. 12 is EELS Ni L3-edge spectra of regions 1 to 3 of the EELS spectrum image of FIG. 11.
FIG. 13 is a graph illustrating high-temperature life characteristics of secondary batteries in which the positive electrode active materials of Examples 1 to 3 and Comparative Examples 1 to 3 are used.
FIG. 14 is a graph illustrating resistance characteristics according to state of charge (SOC) of the secondary batteries in which the positive electrode active materials of Examples 1 to 3 and Comparative Examples 1 to 3 are used.

### MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present invention, the expression "single particle" means a particle composed of one nodule, and the expression "pseudo-single particle" means a composite particle of 30 or less nodules.

The "nodule" is a sub-particle unit constituting the single particle and the pseudo-single particle, wherein the nodule may be a single crystal without a crystalline grain boundary, or may be a polycrystal in which grain boundaries do not exist in appearance when observed by using a scanning electron microscope with a field of view of 5,000 times to 20,000 times.

In the present invention, the expression "secondary particle" means a particle formed by aggregation of a plurality, for example, tens to hundreds of primary particles. Specifically, the secondary particle may be an aggregate of 50 or more primary particles.

In the present invention, the expression "particle" is a concept including any one or all of the single particle, the pseudo-single particle, the primary particle, the nodule, and the secondary particle.

The expression "average particle diameter D₅₀" in the present invention means a particle size on the basis of 50% in a volume cumulative particle size distribution of lithium composite transition metal oxide powder or positive electrode active material powder, wherein it may be measured by using a laser diffraction method. For example, after dispersing the lithium composite transition metal oxide powder or positive electrode active material powder in a dispersion medium, the dispersion medium is introduced into a commercial laser diffraction particle size measurement instrument (e.g., Microtrac MT 3000) and then irradiated with ultrasonic waves of about 28 kHz at an output of 60 W to obtain a volume cumulative particle size distribution graph, and the average particle diameter D₅₀ may then be measured by obtaining a particle size corresponding to 50% of cumulative amount of volume.

The expression "crystallite" in the present invention means a particle unit having substantially the same crystal orientation, wherein it may be confirmed by EBSD (Electron Backscatter Diffraction) analysis. Specifically, the crystallite is the smallest particle unit displayed in the same color in an inverse pole figure (IPF) map which is obtained by EBSD analysis of a cross section of a positive electrode active material that is cut by ion milling.

In the present invention, an "average crystallite size" may be quantitatively analyzed using X-ray diffraction (XRD) analysis by copper (Cu) Kα X-rays. Specifically, the average crystallite size of crystalli n es may be quantitatively analyzed by putting particles to be measured in a holder and analyzing a diffraction grating produced by irradiating the particles with X-rays. Sampling was prepared by putting a powder sample of the measurement target particles in a groove in the middle of a holder for general powder, leveling a surface using a slide glass, and making a sample height the same as an edge of the holder. Then, X-ray diffraction analysis was performed using a fixed divergence slit (FDS) of 0.5° and a 20 range of 15° to 90° under conditions, in which a step size was 0.02° and total scan time was about 20 minutes, using a Bruker D8 Endeavor (light source: Cu Kα, λ=1.54 Å) equipped with a LynxEye XE-T position sensitive detector. Rietveld refinement was performed for the measured data in consideration of charge at each site (metal ions at transition metal sites were +3, Ni ion at a Li site was +2) and cation mixing. Instrumental broadening during the crystallite size analysis was considered by using Fundamental Parameter Approach (FPA) implemented in a Bruker TOPAS program, and entire peaks in the measurement range were used during fitting. A peak shape was fitted using only Lorentzian contribution as a first principle (FP) among peak types available in the TOPAS, and, in this case, strain was not considered.

A "specific surface area" in the present invention is measured by a Brunauer-Emmett-Teller (BET) method, wherein, specifically, the specific surface area may be calculated from a nitrogen gas adsorption amount at a liquid nitrogen temperature (77K) using BELSORP-mino II by Bell Japan Inc.

### Positive Electrode Active Material

Hereinafter, a positive electrode active material according to the present invention will be described.

The positive electrode active material according to the present invention includes (1) lithium nickel-based oxide particles in a form of a single particle or a pseudo-single particle, and (2) a cobalt (Co)-containing coating portion formed in a form of an island on a portion of a surface of the lithium nickel-based oxide particle.

### (1) Lithium Nickel-based Oxide Particles

The lithium nickel-based oxide particle is a single particle composed of one nodule or a pseudo-single particle that is a composite of 30 or less nodules, preferably 2 to 20 nodules, and more preferably 2 to 10 nodules.

Since the lithium nickel-based oxide particle in the form of a single particle or a pseudo-single particle has higher particle strength than a conventional lithium nickel-based oxide in a form of a secondary particle in which tens to hundreds of primary particles are aggregated, particle cracking during rolling is reduced.

Also, with respect to the lithium nickel-based oxide in the form of a single particle or a pseudo-single particle, since the number of nodules constituting the particle is small, changes due to volume expansion and contraction of the nodules during charge and discharge are small, and accordingly, occurrence of cracks in the particles is significantly reduced.

The lithium nickel-based oxide particle may have a composition in which an amount of nickel among total metals excluding lithium is 70 mol% or more, preferably 80 mol% or more, and more preferably 82 mol% or more, and may specifically be a lithium nickel cobalt manganese-based oxide having an amount of nickel among total metals excluding lithium of 70 mol% or more, preferably 80 mol% or more, and more preferably 82 mol% or more. When the amount of the nickel in the lithium nickel-based oxide particle satisfies the above range, high energy density may be achieved.

More specifically, the lithium nickel-based oxide particle may have a composition represented by [Formula 1] below.

[Formula 1] LiₐNi_{b}Co_{c}M¹_{d}M²ₑO₂

In Formula 1, M¹ may be manganese (Mn), aluminum (Al), or a combination thereof, and may preferably be Mn or Mn and Al.

M² may be at least one selected from the group consisting of zirconium (Zr), tungsten (W), yttrium (Y), barium (Ba), calcium (Ca), titanium (Ti), magnesium (Mg), tantalum (Ta), and niobium (Nb), may preferably be at least one selected from the group consisting of Zr, Y, Mg, and Ti, and may more preferably be Zr, Y, or a combination thereof. The element M² is not necessarily included, but, in a case in which it is included in an appropriate amount, it may play a role in promoting grain growth during sintering or improving crystal structure stability.

a represents a molar ratio of lithium in the lithium nickel-based oxide, wherein a may satisfy 0.8≤a≤1.2, 0.85≤a≤1.15, or 0.9≤a≤1.2. When the molar ratio of the lithium satisfies the above range, a crystal structure of the lithium nickel-based oxide may be stably formed.

b represents a molar ratio of nickel among total metals excluding lithium in the lithium nickel-based oxide, wherein b may satisfy 0.7≤b<1, 0.8≤b<1, or 0.82≤b<1. When the molar ratio of the nickel satisfies the above range, high energy density may be exhibited to achieve high capacity.

c represents a molar ratio of cobalt among the total metals excluding lithium in the lithium nickel-based oxide, wherein c may satisfy 0<c<0.3, 0<c<0.2, or 0.01≤c≤0.15. When the molar ratio of the cobalt satisfies the above range, good resistance characteristics and output characteristics may be achieved.

d represents a molar ratio of element M¹ among the total metals excluding lithium in the lithium nickel-based oxide, wherein d may satisfy 0<d<0.3, 0<d<0.2, or 0.01≤d≤0.15. When the molar ratio of the element M¹ satisfies the above range, structural stability of the positive electrode active material is excellent.

e represents a molar ratio of element M² among the total metals excluding lithium in the lithium nickel-based oxide, wherein e may satisfy 0≤e≤0.2, 0≤e≤0.1, or 0≤e≤0.05.

### (2) Coating Portion

The positive electrode active material according to the present invention includes a coating portion which is formed in a form of an island on a portion of the surface of the above-described lithium nickel-based oxide particle in the form of a single particle or a pseudo-single particle and contains Co. Herein, the form of an island refers to a form in which coating portions in the form of a small particle are sporadically distributed on the surface of the lithium nickel-based oxide particle, wherein the coating portion in the form of a particle may have a spherical, plate-like, and/or amorphous shape.

With respect to a high-nickel positive electrode active material having a high nickel content, there is a problem in that transition metal dissolution and structural collapse occur due to a side reaction with an electrolyte solution on a surface of the positive electrode active material where the positive electrode active material and the electrolyte solution are in contact with each other. Conventionally, in order to solve this problem, a method of reducing contact with the electrolyte solution by coating the surface of the high-nickel positive electrode active material with boron or an oxide of a metal, such as Al, has been used. However, since such a coating layer is not electrically active, there is a problem in that resistance of the positive electrode active material is increased when the coating layer is formed on the surface of the active material and the increase in resistance becomes more intensified as a thickness of the coating layer is increased. Particularly, with respect to a single-particle or pseudo-single-particle positive electrode active material, since lithium diffusion resistance is greater than that of a conventional positive electrode active material in the form of a secondary particle, an output degradation problem due to the increase in resistance becomes more serious when the conventional coating layer is applied to the surface of the single-particle positive electrode active material.

As a result of a significant amount of research conducted into improving resistance characteristics of the positive electrode active material in the form of a single particle or a pseudo-single particle, the present inventors found that both resistance characteristics and life characteristics may be improved by forming a cobalt (Co)-containing coating portion in the form of an island on the surface of the lithium nickel-based oxide in the form of a single particle or a pseudo-single particle.

Since cobalt (Co) is an element advantageous for forming a layered structure, a crystal structure of the surface of the positive electrode active material is stably formed when a coating portion is formed using Co, and, as a result, lithium ion diffusion resistance is reduced and crystal structure deformation and particle cracking during charge and discharge may be suppressed to obtain an effect of improving the life characteristics. However, in a case in which the cobalt-containing coating portion is formed in the form of a continuous layer on the surface of the lithium nickel-based oxide particle, formation of an electrically inactive rock-salt phase is increased while Co diffuses from the surface of the lithium nickel-based oxide and, as a result, the resistance increases again. Thus, in the present invention, the effect of improving the resistance characteristics and life characteristics may be maximized by adjusting a heat-treatment temperature during the formation of the coating portion so that the coating portion is formed in the form of an island. Specifically, the coating portion may be formed in an area of 10% to 60%, preferably, 10% to 50% of a total surface area of the lithium nickel-based oxide particle. When the area on which the coating portion is formed satisfies the above range, the effect of improving the resistance characteristics and life characteristics is most excellent.

Preferably, the coating portion may be one in which a lithium cobalt oxide in the form of a particle is sporadically distributed on the surface of the lithium nickel-based oxide particle. The coating portion according to the present invention is prepared by mixing a cobalt-containing coating material with the lithium nickel-based oxide in the form of a single particle or a pseudo-single particle and then performing a heat treatment, wherein lithium remaining on the surface of the lithium nickel-based oxide and cobalt of the coating material may react during the heat treatment to form the lithium cobalt oxide. As described above, since a washing process for removing the residual lithium may be omitted if the residual lithium is removed according to the formation of the coating portion, a process may be simplified. Also, in general, the resistance tends to increase because the oxidation number of Ni on the surface of the positive electrode active material particle is changed to electrically inactive Ni²⁺ in the process of performing the washing process, wherein, in a case in which the washing process is omitted, since the change in the oxidation number of Ni is minimized, an effect of suppressing the increase in resistance may be obtained.

The lithium cobalt oxide may have a particle diameter of 100 nm to 1,000 nm, preferably 300 nm to 700 nm, and more preferably 400 nm to 600 nm. When the particle diameter of the coating portion satisfies the above range, since the formation of the inactive rock-salt phase on the surface of the lithium nickel-based oxide is effectively suppressed by the coating portion, life performance at high temperatures is excellent.

In the positive electrode active material of the present invention, an intensity at 855.5 eV in a Ni L3-edge spectrum measured by electron energy loss spectroscopy on the surface of the lithium nickel-based oxide, which is in contact with the coating portion, is higher than an intensity at 853 eV.

Electron energy loss spectroscopy is a method of obtaining desired information, such as an element, composition, and chemical bonding state of a reaction site, by measuring energy loss of inelastic scattering electrons which are generated when accelerated electrons react with a sufficiently thin specimen. An electron energy loss spectroscopy spectrum may be divided into a low-loss region (low loss excitation), which is an energy loss portion of 0 eV to 50 eV, and a high-loss region (core loss ionization) which is an energy loss portion of greater than 50 eV. An ionization edge appears in the high-loss region, and an oxidation number of a metal may be analyzed using the ionization edge. In the present invention, the Ni L3-edge spectrum was used to analyze the oxidation number of Ni. The electron energy loss spectroscopy (EELS) spectrum may be obtained by using a high-resolution transmission electron microscope (HR-TEM), wherein a horizontal axis represents a loss energy region, and a vertical axis represents a peak intensity.

In the Ni L3-edge spectrum measured by EELS, a Ni³⁺ ion appears around 855.5 eV and a Ni²⁺ ion appears around 853 eV. Thus, a strong peak intensity around 855.5 eV means that there are many Ni³⁺ ions, and a strong peak intensity around 853 eV means that there are many Ni²⁺ ions. That is, that the intensity at 855.5 eV is higher than the intensity at 853 eV in the Ni L3-edge spectrum means that more Ni³⁺ ions exist in the corresponding region, and it indicates that an average oxidation number of nickel on the surface of the lithium nickel-based oxide, which is in contact with the coating portion, is +3 or more. As described above, since the resistance is reduced when the average oxidation number of nickel on the surface of the lithium nickel oxide, which is in contact with the coating portion, is high at +3 or more, an effect of improving capacity and output characteristics may be obtained.

Specifically, in the positive electrode active material of the present invention, a ratio (I_{855.5}/I₈₅₃) of the intensity (I_{855.5}) at 855.5 eV to the intensity at 853 eV (I₈₅₃) in the Ni L3-edge spectrum measured by electron energy loss spectroscopy on the surface of the lithium nickel-based oxide, which is in contact with the coating portion, may be in a range of 1 to 3, preferably 1.2 to 3, and more preferably 1.5 to 3. In a case in which the I_{855.5}/I₈₅₃ on the surface of the lithium nickel-based oxide, which is in contact with the coating portion, satisfies the above range, the resistance characteristics and life characteristics are particularly excellent.

In the positive electrode active material of the present invention, it is desirable that an intensity at 855.5 eV is lower than an intensity at 853 eV in a Ni L3-edge spectrum measured by electron energy loss spectroscopy on the surface of the lithium nickel-based oxide which is not covered by the coating portion (i.e., the average oxidation number of nickel is less than +3).

In a case in which a large amount of Ni²⁺ ions is present on the surface of the positive electrode active material, there is an advantage in reducing the side reaction with the electrolyte solution, but there is a problem in that the resistance is increased because the Ni²⁺ ions are electrically inactive. In a case in which nickel ions with a high oxidation number, such as Ni³⁺ or Ni⁴⁺, are present on the surface of the positive electrode active material, electrical properties, such as capacity and output, are excellent, but, since the side reaction with the electrolyte solution is increased due to high reactivity and the structural collapse of the positive electrode active material is accelerated, there is a problem in that the life characteristics are degraded.

However, in a case in which the oxidation number of nickel is low on the surface not covered by the coating portion and the oxidation number of nickel is high on the surface covered by the coating portion as described above, since contact between the highly reactive nickel with a valence of +3 or +4 and the electrolyte solution is prevented by the coating portion and Ni²⁺ ions with low reactivity are disposed in a portion that is in direct contact with the electrolyte solution, the resistance may be reduced while the side reaction with the electrolyte solution is minimized.

The positive electrode active material according to the present invention may have an average particle diameter of the nodule of 0.5 um to 3 um, preferably 0.8 um to 2.5 µm, and more preferably 0.8 um to 1.5 um. In a case in which the average particle diameter of the nodule satisfies the above range, a positive electrode active material in the form of a single particle or pseudo-single particle having excellent electrochemical properties may be formed. If the average particle diameter of the nodule is excessively small, the number of aggregations of the particles constituting the lithium nickel-based oxide particle is increased to reduce an effect of suppressing particle breakage during rolling, and, if the average particle diameter of the nodule is excessively large, since a lithium diffusion path in the particle is increased, the resistance may be increased and the output characteristics may be degraded.

Also, the positive electrode active material may have an average particle diameter D₅₀ of 2 um to 6 um, preferably 2 um to 5 µm, and more preferably 3 um to 5 um. If the D₅₀ of the positive electrode active material is excessively small, it is difficult to form an active material layer during preparation of an electrode and the electrochemical properties are deteriorated due to poor electrolyte solution impregnability, and, if the D₅₀ is excessively large, there is a problem in that the resistance is increased and the output characteristics are degraded.

Furthermore, the positive electrode active material may have an average crystallite size of 150 nm to 300 nm, 200 nm to 280 nm, or 200 nm to 250 nm. In a case in which the average crystallite size satisfies the above range, since the formation of the rock-salt phase is reduced during the preparation of the lithium nickel-based oxide, a positive electrode active material in the form of a single particle or pseudo-single particle having excellent resistance characteristics may be prepared. In general, the positive electrode active material in the form of a single particle or a pseudo-single particle is prepared by a method of increasing a size of the nodule by increasing sintering temperature, wherein, in a case in which only the size of the nodule is increased in a state in which the crystallite size is small, there is a problem in that a rock-salt phase is formed on a surface of the nodule to increase resistance. However, if the average crystallite size and the average particle diameter of the nodule are increased together, an effect of suppressing the increase in resistance may be obtained while the formation of the rock-salt phase is minimized.

### Method of Preparing Positive Electrode Active Material

Next, a method of preparing a positive electrode active material according to the present invention will be described.

The method of preparing a positive electrode active material according to the present invention includes the steps of (1) preparing a lithium nickel-based oxide in a form of a single particle or a pseudo-single particle by mixing a transition metal precursor and a lithium raw material and sintering the mixture, and (2) forming a coating portion by mixing the lithium nickel-based oxide and a cobalt-containing coating material and performing a heat treatment at a temperature of 600°C to 750°C.

### (1) Lithium Nickel-based Oxide Preparation Step

First, a transition metal precursor and a lithium raw material are mixed and primarily sintered to prepare a lithium nickel-based oxide in a form of a single particle or a pseudo-single particle.

In this case, a commercially available precursor, such as nickel-cobalt-manganese-based hydroxide, may be purchased and used as the transition metal precursor, or the transition metal precursor may be prepared according to a method of preparing a precursor which is known in the art.

Preferably, the transition metal precursor used in the present invention may be a transition metal hydroxide containing nickel and cobalt and having an amount of nickel (Ni) among total transition metals of 80 mol% or more, and may more preferably be a nickel cobalt manganese hydroxide having a Ni content of 80 mol% or more. When the nickel content in the transition metal precursor satisfies the above range, high capacity characteristics may be achieved.

Specifically, the transition metal precursor may have a composition represented by [Formula 2] below.

[Formula 2] NiₓCo_{y}M¹_{z}M²_{w}(OH)₂

In Formula 2, M¹ is Mn, Al, or a combination thereof, and is preferably Mn or a combination of Mn and Al.

M² may be at least one selected from the group consisting of Zr, W, Y, Ba, Ca, Ti, Mg, Ta, and Nb, may preferably be at least one selected from the group consisting of Zr, Y, Mg, and Ti, and may more preferably be Zr, Y, or a combination thereof.

x represents a molar ratio of nickel among total metals in the precursor, wherein x may satisfy 0.8≤x<1, 0.82≤x<1, or 0.83≤x<1. When the molar ratio of the nickel satisfies the above range, high energy density may be exhibited to achieve high capacity.

y represents a molar ratio of cobalt among the total metals in the precursor, wherein y may satisfy 0<y<0.2, 0<y<0.18, or 0.01≤y≤0.17. When the molar ratio of the cobalt satisfies the above range, good resistance characteristics and output characteristics may be achieved.

z represents a molar ratio of element M¹ among the total metals in the precursor, wherein z may satisfy 0<z<0.2, 0<z<0.18, or 0.01≤z≤0.17. When the molar ratio of the element M¹ satisfies the above range, the structural stability of the positive electrode active material is excellent.

w represents a molar ratio of element M² among the total metals in the precursor, wherein w may satisfy 0≤w≤0.1 or 0≤w≤0.05.

For example, the transition metal precursor may be prepared by a co-precipitation reaction while adding a transition metal aqueous solution, an ammonium cationic complexing agent, and a basic compound to a reactor and stirring.

The transition metal aqueous solution may be prepared by dissolving transition metal-containing raw materials in a solvent, such as water, and, for example, may be prepared by dissolving a nickel-containing raw material and a cobalt-containing raw material in water. Also, if necessary, the transition metal aqueous solution may further include a M¹ raw material and/or a M² metal-containing raw material.

The transition metal-containing raw material may be acetic acid salts, carbonates, nitrates, sulfates, halides, sulfides, or oxides of transition metal.

Specifically, the nickel-containing raw material, for example, may be NiO, NiCO₃·2Ni(OH)₂·4H₂O, NiC₂O_{2·}2H₂O, Ni(NO₃)₂·6H₂O, NiSO₄, NiSO₄·6H₂O, nickel halide, or a combination thereof.

The cobalt-containing raw material, for example, may be CoSO₄, Co(OCOCH₃)₂·4H₂O, Co(NO₃)₂·6H₂O, CoSO₄·7H₂O, or a combination thereof.

The M¹-containing raw material may be a manganese-containing raw material and/or an aluminum-containing raw material. The manganese-containing raw material, for example, may be Mn₂O₃, MnO₂, Mn₃O₄, MnCO₃, Mn(NO₃)₂, MnSO_{4·}H₂O, manganese acetate, manganese halide, or a combination thereof. The aluminum-containing raw material, for example, may be Al₂O₃, Al(OH)₃, Al(NO₃)₃, Al₂(SO₄)₃, (HO)₂AlCH₃CO₂, HOAl(CH₃CO₂)₂, Al(CH₃CO₂)₃, aluminum halide, or a combination thereof. However, with respect to Al, it may not be added to the transition metal aqueous solution, but may be added together with the lithium raw material in a sintering step to be described later.

The M²-containing raw material may be acetic acid salts, carbonates, nitrates, sulfates, halides, sulfides, or oxides of metal M².

An amount of each of the transition metal-containing raw materials added may be determined in consideration of a molar ratio of the transition metal in the positive electrode active material to be finally prepared.

The ammonium cationic complexing agent may include at least one compound selected from the group consisting of NH₄OH, (NH₄)₂SO₄, NH₄NO₃, NH₄Cl, CH₃COONH₄, and (NH₄)₂CO₃, and may be added into the reactor in the form of a solution in which the above compound is dissolved in a solvent. In this case, water or a mixture of water and an organic solvent (specifically, alcohol etc.), which may be uniformly mixed with the water, may be used as the solvent.

The basic compound may be at least one compound selected from the group consisting of NaOH, KOH, and Ca(OH)₂, and may be added into the reactor in the form of a solution in which the above compound is dissolved in a solvent. In this case, water or a mixture of water and an organic solvent (specifically, alcohol etc.), which may be uniformly mixed with the water, may be used as the solvent.

If the transition metal aqueous solution, the ammonium cationic complexing agent, and the basic compound are added to the reactor and stirred as described above, precursor particles in the form of a transition metal hydroxide are formed while the transition metals in the transition metal aqueous solution are co-precipitated.

In this case, the transition metal aqueous solution, the ammonium cationic complexing agent, and the basic compound are added in amounts such that a pH of a reaction solution is within a desired range.

If the precursor particles are formed by the above-described method, a transition metal precursor is obtained by separating the particles from the reaction solution. For example, after separating the transition metal precursor from the reaction solution by filtering the reaction solution, the separated transition metal precursor may be washed and dried to obtain a transition metal precursor. In this case, a process, such as grinding and/or classification, may be performed, if necessary.

Next, the transition metal precursor and a lithium raw material are mixed and then sintered to prepare a lithium nickel-based oxide in the form of a single particle or a pseudo-single particle. In this case, the M¹-containing raw material and/or the M²-containing raw material may be mixed together and sintered, if necessary, and specific examples of the M¹-containing raw material and/or the M²-containing raw material are the same as those described above.

As the lithium raw material, lithium-containing sulfates, nitrates, acetic acid salts, carbonates, oxalates, citrates, halides, hydroxides, or oxyhydroxides may be used, and, for example, Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or a mixture thereof may be used.

The lithium raw material and the positive electrode active material precursor may be mixed so that a molar ratio of lithium (Li) :total metals in the precursor is in a range of 1:1 to 1.1:1, preferably, 1.02:1 to 1.05:1. When the mixing ratio of the lithium raw material to the metal in the positive electrode active material precursor satisfies the above range, since a layered crystal structure of a positive electrode active material is well developed, the positive electrode active material having excellent capacity characteristics and structural stability may be prepared.

The sintering is performed at a temperature at which a single particle or pseudo-single particle may be formed. In order to form the single particle or pseudo-single particle, the sintering must be performed at a temperature higher than that during preparation of conventional lithium nickel-based oxide in the form of a secondary particle, and, for example, in a case in which a precursor composition is the same, the sintering must be performed at a temperature about 30°C to 100°C higher than that during the preparation of the conventional lithium nickel-based oxide in the form of a secondary particle. The sintering temperature for forming the single particle or pseudo-single particle may vary depending on a metal composition in the precursor, for example, in a case in which a high-Ni lithium nickel-based oxide having an amount of nickel (Ni) of 80 mol% or more is formed into a single particle or pseudo-single particle, the sintering temperature may be in a range of about 800°C to about 1,000°C, preferably about 800°C to about 950°C, and more preferably about 850°C to about 950°C. When the sintering temperature satisfies the above range, a lithium nickel-based oxide in the form of a single particle or pseudo-single particle having excellent electrochemical properties may be prepared. In a case in which the sintering temperature is less than 800°C, a positive electrode active material in the form of a secondary particle is prepared, and, in a case in which the sintering temperature is greater than 1,000°C, since excessive sintering occurs, the layered crystal structure is not properly formed to deteriorate the electrochemical properties.

Also, the sintering may be performed for 5 hours to 35 hours, preferably 5 hours to 20 hours, and more preferably 6 hours to 15 hours in an oxygen atmosphere. In the present specification, the oxygen atmosphere means an atmosphere containing enough oxygen for sintering in addition to an air atmosphere. Particularly, it is desirable to perform the sintering in an atmosphere in which an oxygen partial pressure is higher than that of the air atmosphere.

The lithium nickel-based oxide prepared by the above-described sintering is in the form of a single particle composed of one nodule or a pseudo-single particle that is a composite of 30 or less nodules, preferably 2 to 20 nodules, and more preferably 2 to 10 nodules.

Also, the lithium nickel-based oxide particle may have a composition in which an amount of nickel among total metals excluding lithium is 80 mol% or more, preferably 82 mol% or more, and more preferably 83 mol% or more, and may specifically be a lithium nickel cobalt manganese-based oxide having an amount of nickel among total metals excluding lithium of 80 mol% or more, preferably 82 mol% or more, and more preferably 83 mol% or more. When the amount of the nickel in the lithium nickel-based oxide particle satisfies the above range, high energy density may be achieved.

More specifically, the lithium nickel-based oxide particle may have a composition represented by [Formula 1] below.

[Formula 1] LiₐNi_{b}Co_{c}M¹_{d}M²ₑO₂

In Formula 1, M¹ may be Mn, Al, or a combination thereof, and may preferably be Mn or Mn and Al.

M² may be at least one selected from the group consisting of Zr, W, Y, Ba, Ca, Ti, Mg, Ta, and Nb, may preferably be at least one selected from the group consisting of Zr, Y, Mg, and Ti, and may more preferably be Zr, Y, or a combination thereof. The element M² is not necessarily included, but, in a case in which it is included in an appropriate amount, it may play a role in promoting grain growth during sintering or improving crystal structure stability.

a represents a molar ratio of lithium in the lithium nickel-based oxide, wherein a may satisfy 0.8≤a≤1.2, 0.85≤a≤1.15, or 0.9≤a≤1.2. When the molar ratio of the lithium satisfies the above range, a crystal structure of the lithium nickel-based oxide may be stably formed.

b represents a molar ratio of nickel among total metals excluding lithium in the lithium nickel-based oxide, wherein b may satisfy 0.8≤b<1, 0.82≤b<1, or 0.83≤b<1. When the molar ratio of the nickel satisfies the above range, high energy density may be exhibited to achieve high capacity.

c represents a molar ratio of cobalt among the total metals excluding lithium in the lithium nickel-based oxide, wherein c may satisfy 0<c<0.2, 0<c<0.18, or 0.01≤c≤0.17. When the molar ratio of the cobalt satisfies the above range, good resistance characteristics and output characteristics may be achieved.

d represents a molar ratio of element M¹ among the total metals excluding lithium in the lithium nickel-based oxide, wherein d may satisfy 0<d<0.2, 0<d<0.18, or 0.01≤d≤0.17. When the molar ratio of the element M¹ satisfies the above range, structural stability of the positive electrode active material is excellent.

e represents a molar ratio of element M² among the total metals excluding lithium in the lithium nickel-based oxide, wherein e may satisfy 0≤e≤0.1 or 0≤e≤0.05.

### (2) Coating Portion Formation Step

Next, the lithium nickel-based oxide in the form of a single particle or a pseudo-single particle and a cobalt-containing coating material are mixed and then heat-treated to form a coating portion.

The cobalt-containing coating material, for example, may be at least one selected from the group consisting of Co₃O₄ Co(OH)₂, Co₂O₃, Co₃(PO₄)₂, CoF₃, Co(OCOCH₃)₂·4H₂O, Co(NO₃)·6H₂O, Co(SO₄)₂·7H₂O, and CoC₂O₄, may preferably be at least one selected from Co₃O₄ and Co(OH)₂, and may more preferably be Co(OH)₂, but is not limited thereto.

The cobalt-containing coating material may have an average particle diameter of 100 nm to 1,000 nm, preferably 300 nm to 700 nm, and more preferably 400 nm to 600 nm. When the average particle diameter of the cobalt-containing coating material satisfies the above range, the cobalt-containing coating material may be smoothly coated on the surface of the lithium nickel-based oxide, and, since the formation of the rock-salt phase at an interface between the coating portion and the lithium nickel-based oxide is suppressed, an effect of improving the resistance characteristics is excellent.

The lithium nickel-based oxide and cobalt-containing coating material may be mixed by solid-phase mixing or liquid-phase mixing, but, with respect to the liquid-phase mixing, since the process is complicated and the lithium nickel-based oxide may be damaged by a solvent during a coating process, the mixing by the solid-phase mixing is more preferable.

Also, the lithium nickel-based oxide and the cobalt-containing coating material may be mixed in a weight ratio of 100:1 to 100:8, preferably 100:1 to 100:6, and more preferably 100:2 to 100:5. When the mixing ratio of the lithium nickel-based oxide and the cobalt-containing coating material satisfies the above range, the nickel content in the positive electrode active material may be secured above a certain level, and, since an amount of the expensive cobalt raw material used may be reduced, the increase in resistance may be effectively suppressed while reducing costs.

It is desirable that the heat treatment is performed in a temperature range of 600°C to 750°C, preferably 600°C to 700°C, and more preferably 650°C to 700°C. When the heat treatment temperature during the formation of the coating layer satisfies the above range, the Co-containing coating portion suppresses the formation of the rock-salt phase at the interface between the Co-containing coating portion and the lithium nickel-based oxide, and the coating portion is formed in the form of an island on a portion of the surface of the lithium nickel-based oxide.

It is desirable that the method of preparing a positive electrode active material according to the present invention does not include a washing process. Conventionally, it was common to perform a washing process after sintering to reduce an amount of lithium by-product during the preparation of the high-Ni NCM-based lithium nickel-based oxide having a nickel (Ni) content of 80 mol% or more. However, according to the research of the present inventors, in a case in which the washing process was performed during the preparation of the positive electrode active material in the form of a single particle or a pseudo-single particle, it was found that surface properties of the lithium nickel-based oxide were deteriorated during the washing process to increase resistance. Thus, since washing is not performed during the preparation of the positive electrode active material of the present invention and residual lithium on the surface of the lithium nickel-based oxide is allowed to be consumed through the coating portion formation process, it is more effective in improving the resistance characteristics.

### Positive Electrode

Next, a positive electrode according to the present invention will be described.

The positive electrode according to the present invention includes a positive electrode active material layer including the above-described positive electrode active material according to the present invention. Specifically, the positive electrode includes a positive electrode collector and a positive electrode active material layer which is disposed on the positive electrode collector and includes the above-described positive electrode active material. Since the positive electrode active material has been described above, the remaining components will be described below.

In the positive electrode, the positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 µm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a nonwoven fabric body, and the like.

Also, the positive electrode active material layer may include a conductive agent and a binder in addition to the above-described positive electrode active material.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon-based materials such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt%, preferably 1 wt% to 20 wt%, and more preferably 1 wt% to 10 wt% based on a total weight of the positive electrode active material layer.

The binder improves the adhesion between the positive electrode active material particles and the adhesion between the positive electrode active material and the positive electrode collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt%, preferably 1 wt% to 20 wt%, and more preferably 1 wt% to 10 wt% based on the total weight of the positive electrode active material layer.

The positive electrode may be prepared according to a typical method of preparing a positive electrode. For example, after a positive electrode slurry is prepared by mixing the positive electrode active material, the binder, and/or the conductive agent in a solvent and is coated on the positive electrode collector, the positive electrode may be prepared by drying and rolling the coated positive electrode collector. In this case, types and amounts of the positive electrode active material, the binder, and the conductive are the same as those previously described.

The solvent may be a solvent normally used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of the slurry and manufacturing yield, and may allow to have viscosity that may provide excellent thickness uniformity during the subsequent coating for the preparation of the positive electrode.

As another method, the positive electrode may be prepared by casting the positive electrode slurry on a separate support and then laminating a film separated from the support on the positive electrode collector.

### Lithium Secondary Battery

Next, a lithium secondary battery according to the present invention will be described.

The lithium secondary battery of the present invention includes the positive electrode according to the present invention. Specifically, the lithium secondary battery includes a positive electrode, a negative electrode disposed to face the positive electrode, a separator disposed between the positive electrode and the negative electrode, and an electrolyte, wherein the positive electrode is as described above. Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 µm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a nonwoven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used.

Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon-based materials such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt%, preferably 1 wt% to 20 wt%, and more preferably 1 wt% to 10 wt% based on a total weight of the negative electrode active material layer.

The binder improves the adhesion between the negative electrode active material particles and the adhesion between the negative electrode active material and the negative electrode collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt%, preferably 1 wt% to 20 wt%, and more preferably 1 wt% to 10 wt% based on the total weight of the negative electrode active material layer.

The negative electrode active material layer, for example, may be prepared by coating a negative electrode slurry including the negative electrode active material and optionally the binder and the conductive agent on the negative electrode collector and drying the coated negative electrode collector, or may be prepared by casting the negative electrode slurry on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 5.0 M, preferably, 0.1 M to 3.0 M. If the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, an additive may be further included in the electrolyte. For example, as the additive, a halo-alkylene carbonate-based compound such as difluoroethylene carbonate, pyridine, triethylphosphite, triethanolamine, cyclic ether, ethylenediamine, n-glyme, hexamethylphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be used alone or in a mixture thereof, but the present invention is not limited thereto. The additive may be included in an amount of 0.1 wt% to 10 wt%, preferably, 0.1 wt% to 5 wt% based on a total weight of the electrolyte.

As described above, since the lithium secondary battery including the positive electrode active material according to the present invention stably exhibits excellent capacity characteristics, output characteristics, and life characteristics, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Preparation Example 1

A Ni_{0.86}Co_{0.08}Mn_{0.06}(OH)₂ transition metal precursor and LiOH·H₂O were put into a Henschel mixer having a volume of 700 L in amounts such that a weight ratio of transition metals (Ni+Co+Mn) :Li was 1:1.05, and mixing was performed at 400 rpm for 20 minutes. The mixed powder was put into an alumina crucible having a size of 330 mm × 330 mm, and sintered at 890°C for 12 hours in an oxygen (O₂) atmosphere to prepare a Li[Ni_{0.86}Co_{0.08}Mn_{o.06}]O₂ lithium nickel-based oxide.

### Preparation Example 2

A Ni_{0.93}Co_{0.05}Mn_{0.02}(OH)₂ transition metal precursor and LiOH·H₂O were put into a Henschel mixer having a volume of 700 L in amounts such that a weight ratio of transition metals (Ni+Co+Mn) :Li was 1:1.05, and mixing was performed at 400 rpm for 20 minutes. The mixed powder was put into an alumina crucible having a size of 330 mm × 330 mm, and sintered at 855°C for 15 hours in an oxygen (O₂) atmosphere to prepare a Li[Ni_{0.93}Co_{0.05}Mn_{0.02}]O₂ lithium nickel-based oxide.

### Example 1

The lithium nickel-based oxide prepared according to Preparation Example 1 and Co(OH)₂ were mixed in a weight ratio of 100:3, and heat-treated at 700°C for 5 hours to prepare a positive electrode active material in which a Co-containing coating portion was formed on a surface of the lithium nickel-based oxide in the form of a single particle or a pseudo-single particle.

### Example 2

The lithium nickel-based oxide prepared according to Preparation Example 1 and Co(OH)₂ were mixed in a weight ratio of 100:1.5, and heat-treated at 700°C for 5 hours to prepare a positive electrode active material in which a Co-containing coating portion was formed on a surface of the lithium nickel-based oxide in the form of a single particle or a pseudo-single particle.

### Example 3

The lithium nickel-based oxide prepared according to Preparation Example 2 and Co(OH)₂ were mixed in a weight ratio of 100:2, and heat-treated at 660°C for 5 hours to prepare a positive electrode active material in which a Co-containing coating portion was formed on a surface of the lithium nickel-based oxide in the form of a single particle or a pseudo-single particle.

### Comparative Example 1

The lithium nickel-based oxide prepared according to Preparation Example 1 and Co(OH)₂ were mixed in a weight ratio of 100:3, and heat-treated at 800°C for 5 hours to prepare a positive electrode active material in which a Co-containing coating portion was formed on a surface of the lithium nickel-based oxide in the form of a single particle or a pseudo-single particle.

### Comparative Example 2

The lithium nickel-based oxide prepared according to Preparation Example 1 was used as a positive electrode active material.

### Comparative Example 3

The lithium nickel-based oxide prepared according to Preparation Example 2 and Co(OH)₂ were mixed in a weight ratio of 100:2, and heat-treated at 800°C for 5 hours to prepare a positive electrode active material in which a Co-containing coating portion was formed on a surface of the lithium nickel-based oxide in the form of a single particle or a pseudo-single particle.

### Experimental Example 1: Confirmation of Form of the Coating Portion

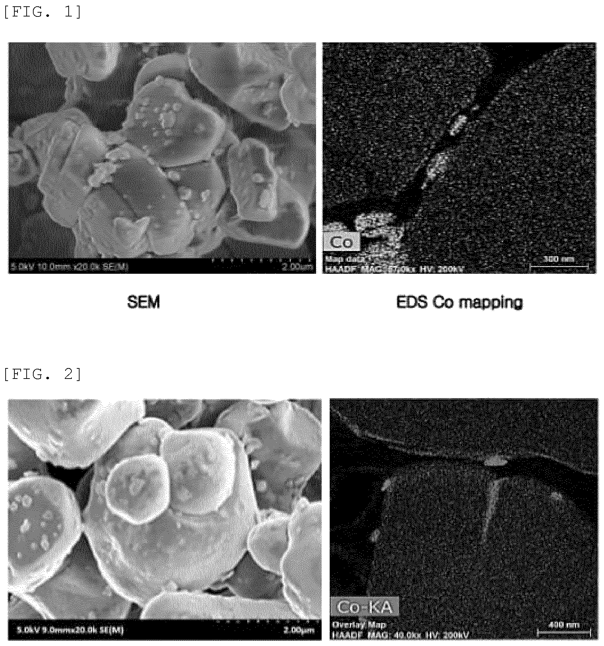

A form of the coating portion and a particle shape of the positive electrode active materials prepared by Examples 1 to 3 and Comparative Examples 1 to 3 were observed through scanning electron microscope (SEM) and energy dispersive X-ray spectroscopy (EDS) analysis. SEM and EDS analysis results of the positive electrode active materials prepared by Examples 1 to 3 and Comparative Examples 1 to 3 were illustrated in FIGS. 1 to 6, respectively.

According to FIGS. 1 to 6, it may be confirmed that the positive electrode active materials prepared by Examples 1 to 3 and Comparative Examples 1 to 3 each included a lithium nickel-based oxide in the form of a pseudo-single particle which was a composite of 10 or less nodules.

Also, referring to FIGS. 1 to 6, the positive electrode active materials prepared by Examples 1 to 3 were coated in the form of an island in which small micrometer-sized particles containing Co were sporadically distributed on a portion of the surface of the lithium nickel-based oxide in the form of a pseudo-single particle. An area where the coating portion was formed was approximately 20% or less of a total surface area of the lithium nickel-based oxide particle.

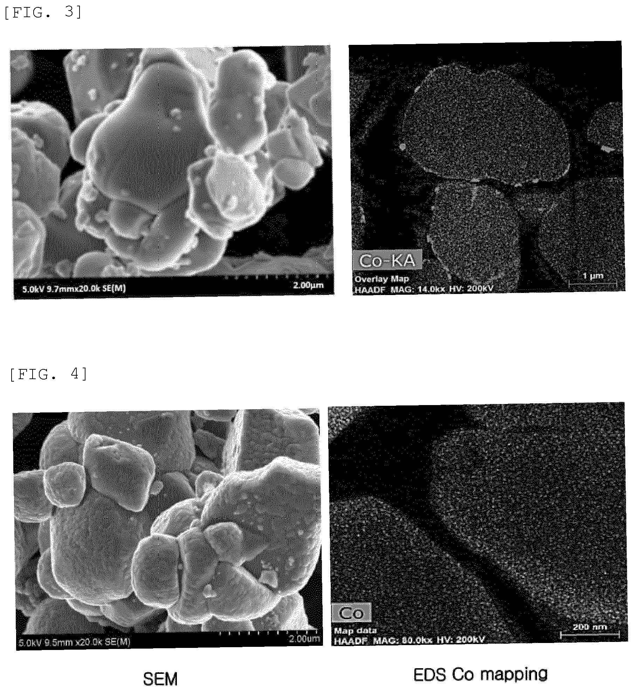

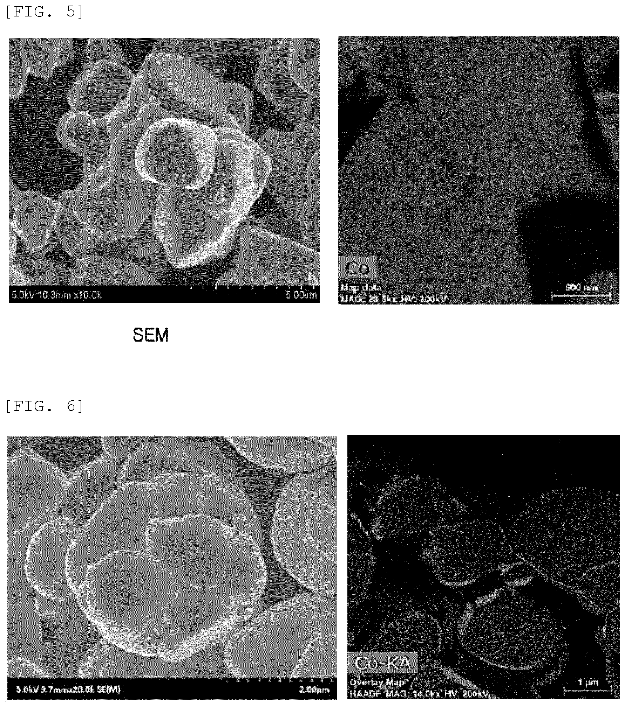

Referring to FIGS. 4 and 6, it may be confirmed that, in the positive electrode active materials prepared by Comparative Examples 1 and 3, a Co-containing coating portion in the form of a continuous layer was formed on the surface of the lithium nickel-based oxide in the form of a pseudo-single particle.

Furthermore, referring to FIG. 5, it may be confirmed that, in the positive electrode active material prepared by Comparative Example 2, a Co-containing coating portion was not present on the surface of the lithium nickel-based oxide in the form of a pseudo-single particle.

### Experimental Example 2

Electron energy loss spectroscopy (EELS) analysis was performed on an interface between the coating portion and the surface of the lithium nickel-based oxide of each of the positive electrode active materials prepared by Examples 1 to 3 and Comparative Examples 1 to 3 to obtain a Ni L3-edge spectrum, and I_{855.5}/I₈₅₃, a ratio of an intensity at 855.5 eV to an intensity at 853 eV, in the corresponding spectrum was measured. Measurement results are presented in [Table 1] below.

**[Table 1]**

| | I_{855.5}/I₈₅₃ |
|---|---|
| Example 1 | 2.02 |
| Example 2 | 2.67 |
| Example 3 | 2.05 |
| Comparative Example 1 | 1.13 |
| Comparative Example 2 | 0.71 |
| Comparative Example 3 | 0.84 |

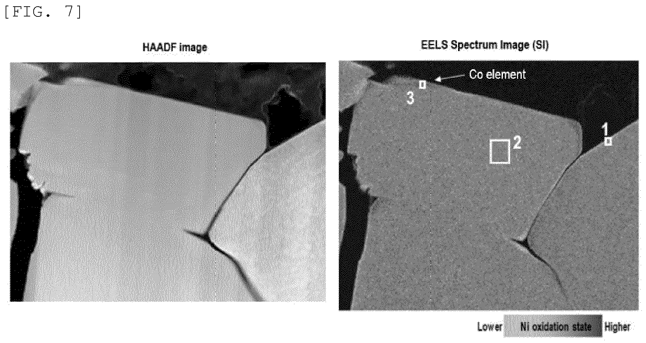

Also, HAADF (High-Angle Annular Dark-Field) images and EELS (Electron energy loss spectroscopy) spectrum images of the positive electrode active materials prepared by Example 1 and Comparative Examples 1 and 2 are illustrated in FIGS. 7 to 11.

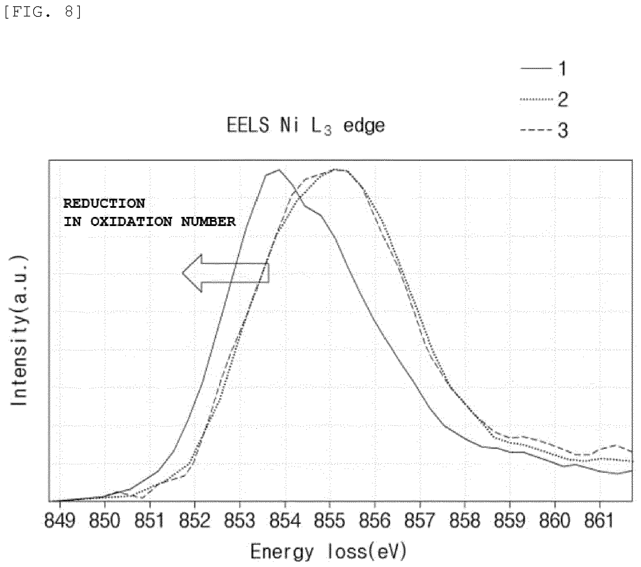

The HAADF (High-Angle Annular Dark-Field) image and the EELS (Electron energy loss spectroscopy) spectrum image of the positive electrode active material prepared by Example 1 is illustrated in FIG. 7, and EELS Ni L3-edge spectra of regions 1 to 3 of the EELS spectrum image of FIG. 7 are illustrated in FIG. 8.

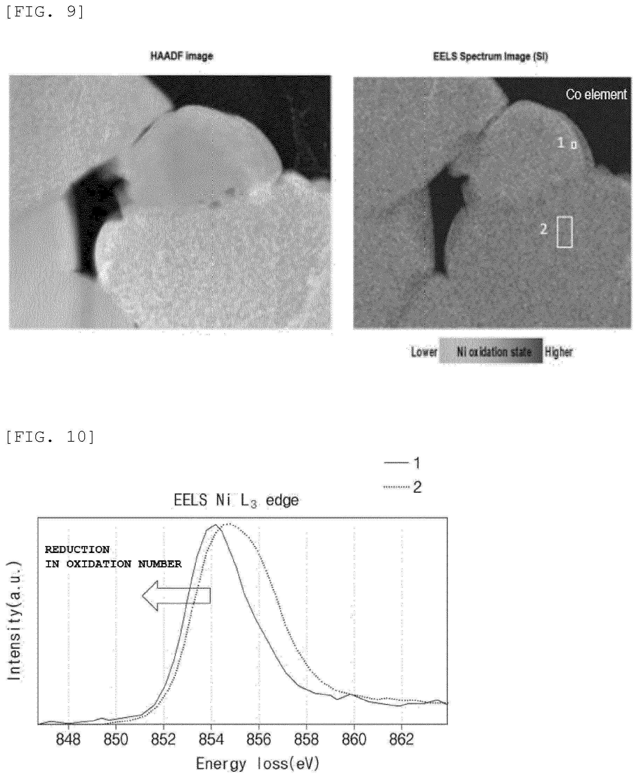

The HAADF image and the EELS spectrum image of the positive electrode active material prepared by Comparative Example 1 is illustrated in FIG. 9, and EELS Ni L3-edge spectra of regions 1 and 2 of the EELS spectrum image of FIG. 9 are illustrated in FIG. 10.

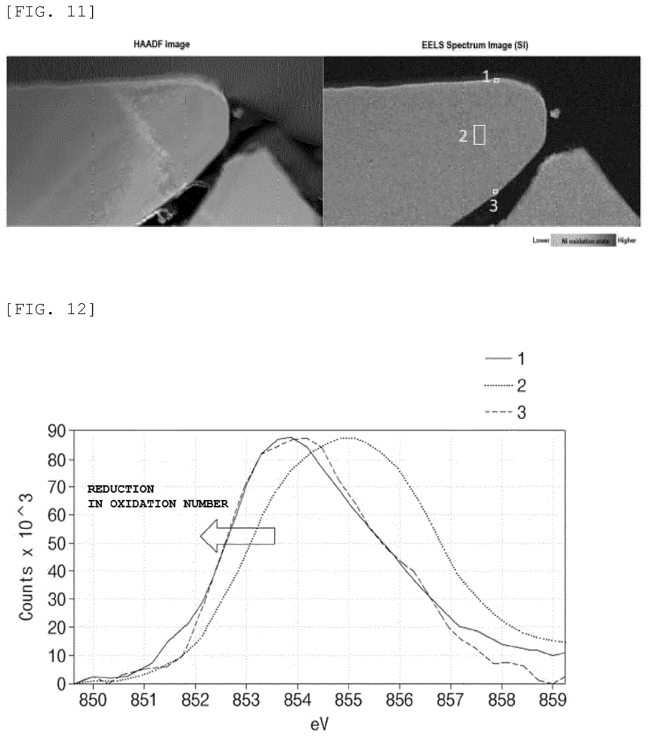

The HAADF image and the EELS spectrum image of the positive electrode active material prepared by Comparative Example 2 is illustrated in FIG. 11, and EELS Ni L3-edge spectra of regions 1 to 3 of the EELS spectrum image of FIG. 11 are illustrated in FIG. 12.

According to FIGS. 7 and 8, with respect to the positive electrode active material prepared by Example 1, it may be confirmed that the intensity at 855.5 eV was higher than the intensity at 853 eV in the EELS Ni L3-edge spectrum of region 3 as the surface of the lithium nickel-based oxide which was in contact with the Co coating portion, and it may be confirmed from the EELS spectrum image that the oxidation number of nickel in region 3 was higher than +3. In contrast, in the EELS Ni L3-edge spectrum of region 1 where the coating portion was not present, it may be confirmed that the intensity at 855.5 eV was lower than the intensity at 853 eV, and the oxidation number of nickel in region 3 was low at less than +3 in the EELS spectrum image.

Referring to FIGS. 9 and 10, with respect to the positive electrode active material of Comparative Example 1 in which the Co-containing coating portion was formed on the entire surface of the lithium nickel-based oxide, it may be confirmed that the intensity at 855.5 eV and the intensity at 853 eV were almost similar in the EELS Ni L3-edge spectrum of region 1 as the interface between the coating portion and the lithium nickel-based oxide, and the oxidation number of nickel in region 1 was low at less than +3 in the EELS spectrum image.

Furthermore, referring to FIGS. 11 and 12, with respect to the positive electrode active material of Comparative Example 2 in which a Co coating portion was not formed, it may be confirmed that Ni with low oxidation number, that is, Ni with a valence of +2 was distributed over the entire surface of the lithium nickel-based oxide.

### <Secondary Battery Preparation>

Each of the positive electrode active materials prepared in Examples 1 to 3 and Comparative Examples 1 to 3, a carbon black conductive agent, and a PVDF binder were mixed in N-methylpyrrolidone in a weight ratio of 95:2:3 to prepare a positive electrode slurry. One surface of an aluminum current collector was coated with the positive electrode slurry, dried at 130°C, and then rolled to prepare each positive electrode.

A lithium metal electrode was used as a negative electrode.

A lithium secondary battery was prepared by preparing an electrode assembly by disposing a separator between the positive electrode and the negative electrode, disposing the electrode assembly in a battery case, and then injecting an electrolyte solution into the case. The electrolyte solution was prepared by dissolving 1 M LiPF₆ in a mixed organic solvent in which ethylene carbonate/dimethyl carbonate/diethyl carbonate were mixed in a volume ratio of 3:4:3.

### Experimental Example 3: Initial Charge and Discharge Evaluation

Each of the above-prepared lithium secondary batteries was charged to 4.25 V in a constant current-constant voltage (CC-CV) mode, and then discharged to 2.5 V in a CC mode to measure initial charge and discharge capacity. In this case, the lithium secondary batteries, in which the positive electrode active materials of Examples 1 and 2 and Comparative Examples 1 and 2 were used, were charged and discharged at a rate of 0.1 C, and the lithium secondary batteries, in which the positive electrode active materials of Examples 3 and Comparative Examples 3 were used, were charged and discharged at a rate of 0.2 C.

### Experimental Example 4: 45°C Cycle Characteristics Evaluation

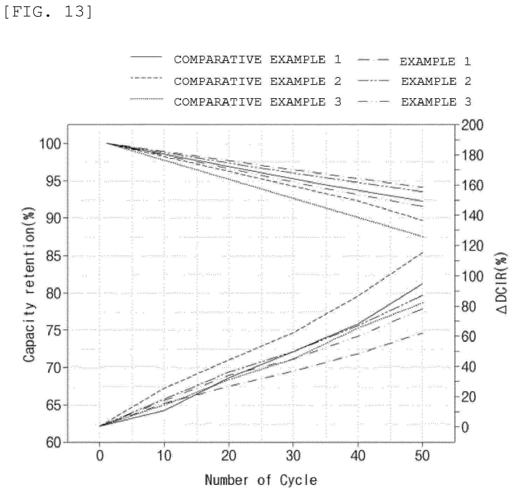

After charging of each of the above-prepared lithium secondary batteries at 0.5 C to 4.3 V in a CC-CV mode at 45°C and discharging of each lithium secondary battery at a constant current of 1.0 C to 2.5 V were set as one cycle and 50 cycles of the charging and discharging were performed, capacity retention and resistance increase rate were measured to evaluate life characteristics. Measurement results are presented in [Table 2] and FIG. 13 below.

**[Table 2]**

| | Initial charge/disch arge capacity (mAh/g) | Capacity retention (%) | Resistance increase rate (%) |
|---|---|---|---|
| Example 1 | 232.1/208.2 | 94.1 | 62.0 |
| Example 2 | 228.3/207.1 | 93.3 | 87.0 |
| Example 3 | 243.3/213.5 | 91.5 | 77.6 |
| Comparative Example 1 | 227.7/207.5 | 92.0 | 93.6 |
| Comparative Example 2 | 225.8/206.9 | 89.6 | 114.6 |
| Comparative Example 3 | 242.4/211.7 | 85.2 | 111.6 |

According to Table 2 and FIG. 13, it may be confirmed that the lithium secondary batteries, in which the positive electrode active materials of Examples 1 to 3 were used, had better initial charge and discharge capacity and life characteristics than the lithium secondary batteries in which the positive electrode active materials of Comparative Examples 1 to 3 were used, and, particularly, it may be confirmed that the resistance increase rates were significantly reduced.

### Experimental Example 5: Evaluation of Resistance Characteristics According to SOC

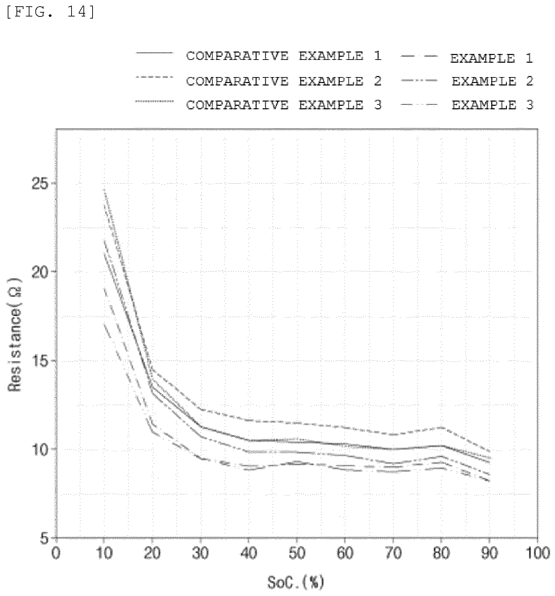

After each of the above-prepared lithium secondary batteries was charged and discharged once at 0.2 C/0.2 C, each state of SOC was set at 0.2 C, a current was then applied at 2.5 C for 10 seconds, and resistance was measured through a change in voltage by applying the current at 2.5 C. Measurement results are presented in FIG. 14.

According to FIG. 14, it may be confirmed that the lithium secondary batteries, in which the positive electrode active materials of the examples, in which the coating portion was formed in the form of an island on a portion of the surface of the lithium nickel-based oxide particle and the Ni L3-edge spectrum on the surface of the lithium nickel-based oxide particle, which was in contact with the coating portion, satisfied the conditions of the present invention, were used, had lower resistance characteristics than the lithium secondary batteries in which the positive electrode active materials of the comparative examples were used.

## Claims

1. A positive electrode active material comprising:
a lithium nickel-based oxide in a form of a single particle composed of one nodule or a pseudo-single particle that is a composite of 30 or less nodules; and
a coating portion which is formed in a form of an island on a portion of a surface of the lithium nickel-based oxide particle and comprises cobalt (Co),
wherein, in a nickel (Ni) L3-edge spectrum obtained by measuring the surface of the lithium nickel-based oxide, which is in contact with the coating portion, by electron energy loss spectroscopy, an intensity at 855.5 eV is higher than an intensity at 853 eV.

2. The positive electrode active material of claim 1, wherein, in a Ni L3-edge spectrum obtained by measuring the surface of the lithium nickel-based oxide, on which the coating portion is not formed, by electron energy loss spectroscopy, an intensity at 855.5 eV is lower than an intensity at 853 eV.

3. The positive electrode active material of claim 1, wherein the coating portion is formed in an area of 10% to 60% of a total surface area of the lithium nickel-based oxide particle.

4. The positive electrode active material of claim 1, wherein the coating portion is one in which a lithium cobalt oxide in a form of a particle is sporadically distributed.

5. The positive electrode active material of claim 3, wherein the lithium cobalt oxide has a particle diameter of 100 nm to 1,000 nm.

6. The positive electrode active material of claim 1, wherein the lithium nickel-based oxide has a composition represented by [Formula 1].
[Formula 1 ] LiₐNi_{b}Co_{c}M¹_{d}M²ₑO₂
wherein, in Formula 1, M¹ is manganese (Mn), aluminum (Al), or a combination thereof, M² is zirconium (Zr), tungsten (W), titanium (Ti), magnesium (Mg), calcium (Ca), strontium (Sr), and barium (Ba), and 0.8≤a≤1.2, 0.83≤b<1, 0<c<0.17, 0<d<0.17, and 0≤e≤0.1.

7. A method of preparing a positive electrode active material, the method comprising steps of:
preparing a lithium nickel-based oxide in a form of a single particle or a pseudo-single particle by mixing a transition metal precursor and a lithium raw material and sintering the mixture; and
forming a coating portion by mixing the lithium nickel-based oxide and a cobalt-containing coating material and performing a heat treatment at a temperature of 600°C to 750°C.

8. The method of claim 7, wherein the cobalt-containing coating material is at least one selected from the group consisting of Co₃O₄, Co(OH)₂, Co₂O₃, Co₃(PO4)₂, CoF₃, Co(OCOCH₃)₂·4H₂O, Co(NO₃)·6H₂O, Co(SO₄)₂·7H₂O and CoC₂O₄.

9. The method of claim 7, wherein the cobalt-containing coating material has an average particle diameter of 100 nm to 1,000 nm.

10. The method of claim 7, wherein the lithium nickel-based oxide and the cobalt-containing coating material are mixed in a weight ratio of 100:1 to 100:8.

11. The method of claim 7, wherein the transition metal precursor is a nickel cobalt manganese hydroxide having a Ni content of 80 mol% or more.

12. The method of claim 7, wherein the forming of the coating portion is performed without a washing process after the preparing of the lithium nickel-based oxide.

13. A positive electrode comprising a positive electrode active material layer which includes the positive electrode active material of any one of claims 1 to 6.

14. A lithium secondary battery comprising the positive electrode of claim 13.
